# EUROPÄISCHE PATENTSCHRIFT

(11) **EP 3 856 464 B1**
(45) Veröffentlichungstag und Bekanntmachung des Hinweises auf die Patenterteilung: **02.11.2022**
(21) Anmeldenummer: 19762414.1
(22) Anmeldetag: 06.09.2019
(51) Int. Cl.: B25J 9/00, B25J 9/04, B25J 9/08, B25J 19/00

(54) **ROBOTER MIT KOMPLEMENTÄREN BEFESTIGUNGSELEMENTEN ZUR BAUGRUPPENVERBINDUNG**
ROBOT WITH COMPLEMENTARY FIXTURE ASSEMBLY FOR CONNECTION OF MODULES
ROBOT POURVU D'ÉLÉMENTS DE FIXATION COMPLÉMENTAIRES PERMETTANT DE RACCORDER LES MODULES

(30) Priorität: 24.09.2018 EP 18196270
(43) Veröffentlichungstag der Anmeldung: 04.08.2021
(60) Teilanmeldung: 22187367.2
(73) Patentinhaber: fruitcore robotics GmbH, 78467 Konstanz (DE)
(72) Erfinder: RIEGGER, Jens Robert, 78462 Konstanz (DE); FREY, Manuel Tobias, 78467 Konstanz (DE); FÜSSL, Johannes, 78464 Konstanz (DE)
(74) Vertreter: Grünecker Patent- und Rechtsanwälte PartG mbB
(86) Internationale Anmeldenummer: PCT/EP2019/073810
(87) Internationale Veröffentlichungsnummer: WO 2020/064302

(56) Entgegenhaltungen:
- JP-A- 2013 056 419
- JP-U- S6 292 179
- US-A- 5 540 541
- US-A1- 2008 129 239
- US-A1- 2017 341 226

## Beschreibung

Die vorliegende Erfindung betrifft einen Roboter mit einer ersten Baugruppe und einer zweiten Baugruppe, wobei in der ersten Baugruppe eine Lagerung vorgesehen ist, durch die die zweite Baugruppe gegenüber der ersten Baugruppe bewegbar ist. Die Erfindung betrifft weiterhin ein Verfahren zur Montage von zwei Baugruppen, insbesondere zwei Roboterarmen, eines Roboters.

Für die Verbindung von Baugruppen von Robotern bei der Montage oder im Rahmen von Wartungsarbeiten müssen oft Lager während der Montage eingefügt und verbaut werden. Dies führt zu einem komplexen Montageprozess mit vielen Einzelteilen, die genau zueinander in Position gebracht werden müssen. Alternativ können die Lager fest in eine der beiden Baugruppen integriert sein. Dies erfordert dann aber eine sehr genaue relative Positionierung der Baugruppen, wobei insbesondere die Drehachsen in den verschiedenen Baugruppen genau zueinander ausgerichtet sein müssen. Folglich ergibt sich ebenfalls eine schwierige Montage.

Aus der CN 207 710 822 U ist ein Arm für einen humanoiden Roboter bekannt, der eine Servo-Antriebseinheit mit verdrehbaren Scheiben aufweist, die an einem Verbindungsstück einer angrenzenden Baugruppe befestigt werden. Die Dokumente US 2008/129239, US 2017/341226, JP S62 92179 U, JP 2013 056419, US 5 540 541 und US 2006/182595 offenbaren mehrere unterschiedliche Lösungen für die Montage der Teile eines Roboterarms.

Die Erfindung hat die Aufgabe, eine vereinfachte Montage eines Roboters zu ermöglichen und dennoch eine hohe Präzision in der Ausrichtung der zueinander relativ bewegbaren Baugruppen zu gewährleisten.

Diese Aufgabe wird erfindungsgemäß durch einen Roboter mit den Merkmalen des Patentanspruchs 1, durch ein Verfahren zur Montage von zwei Baugruppen umfassend zwei Roboterarme eines Roboters mit den Merkmalen des Patentanspruchs 8, bzw. durch ein Verfahren zur Montage von zwei Baugruppen umfassend zwei Roboterarme eines Roboters mit den Merkmalen des Patentanspruchs 9 gelöst. Vorteilhafte Ausgestaltungen und Weiterbildungen der Erfindung sind Gegenstand der abhängigen Ansprüche.

Die Erfindung stellt einen Roboter mit einer ersten Baugruppe und einer zweiten Baugruppe bereit, wobei in der ersten Baugruppe zumindest eine Lagerung vorgesehen ist, durch die die zweite Baugruppe gegenüber der ersten Baugruppe bewegbar ist, wobei erfindungsgemäß die zumindest eine Lagerung ein erstes Befestigungselement umfasst und die zweite Baugruppe ein zweites Befestigungselement, wobei die ersten und zweiten Befestigungselemente miteinander insbesondere in einer lösbaren Befestigung verbunden sind, und wobei die ersten und zweiten Befestigungselemente bereichsweise komplementär ausgebildet sind. Dies ermöglicht eine einfache und schnelle Montage der ersten und zweiten Baugruppen miteinander. Jede Baugruppe kann als vormontierte Komponente bereitgestellt werden und durch die Befestigungselemente einfach und schnell zu einer Gesamtbaugruppe zusammengeführt werden. Die Befestigung über die wenigstens bereichsweise komplementären Befestigungselemente ermöglicht, dass eine steife und spielfreie Lagerung für die Relativbewegung der Baugruppen bereitgestellt wird, die zudem eine genaue Ausrichtung der Baugruppen zueinander ermöglicht.

Somit müssen keine oder wenige zusätzliche Teile bei der Montage der beiden Baugruppen eingebracht werden, insbesondere da die Lagerung bereits in der ersten Baugruppe verbaut ist. Zudem kann durch die bereichsweise komplementären Befestigungselemente ein aufwändiges Ausrichten der beiden Baugruppen bzw. der einzelnen Befestigungselemente zueinander entfallen, da die komplementäre Ausbildung die relativen Positionen der Befestigungselemente zueinander vorgibt. Dies ermöglicht auch eine Selbstzentrierung der Befestigungselemente und damit der Baugruppen, insbesondere wenn die Lagerung eine Drehlagerung um eine bestimmte Achse ist.

Vorteilhafterweise ist die Lagerung so gestaltet, dass das erste Befestigungselement drehbar in der ersten Baugruppe gelagert ist. Insbesondere kann diese drehbare Lagerung mit einem Antrieb versehen werden, damit die zweite Baugruppe geregelt gegenüber der ersten Baugruppe verdreht werden kann. Dafür kann in der Lagerung auch ein Sensor vorgesehen sein, der ein Rückführsignal, insbesondere bezüglich der relativen Verdrehung der Baugruppen, für eine Regelungseinheit bereitstellt.

Die ersten und zweiten Befestigungselemente sind ineinander einschiebbar. Insbesondere sind die Befestigungselemente soweit ineinander einschiebbar, bis die komplementären Flächen miteinander in Kontakt kommen. Beispielsweise kann ein Anschlag vorgesehen sein, der die Einschiebbarkeit in der gewünschten Position beschränkt.

Das erste oder zweite Befestigungselement bildet eine Aufnahme und das andere der ersten und zweiten Befestigungselemente einen Vorsprung, wobei der Vorsprung für die Befestigung in einer Einschieberichtung in die Aufnahme eingeführt ist. Der Vorsprung und die Aufnahme ermöglichen durch ihre komplementäre Form einen spielfreien Sitz und eine genaue Positionierung der Befestigungselemente. Insbesondere bildet das erste Befestigungselement eine Aufnahme und das zweite Befestigungselement einen Vorsprung. In anderen Ausführungsformen bildet das zweite Befestigungselement eine Aufnahme und das erste Befestigungselement einen Vorsprung. Der Vorsprung steht insbesondere über eine Seiten- oder Innenfläche der jeweiligen Baugruppe über, wobei in anderen Ausführungsformen der Vorsprung auch in einem zurückgesetzten Bereich vorgesehen sein kann.

In einer Ausführungsform ist ein Vorspannelement vorgesehen, mit dem eine Vorspannung auf den Vorsprung in der Einschieberichtung aufbringbar ist. Insbesondere ist das Vorspannelement eine Vorspannplatte, eine Vorspannbuchse oder ein Vorspannbügel, das mit einer Vorspannung auf den Vorsprung wirkt. Die Vorspannung kann beispielsweise durch elastische Elemente, Schrauben oder Clips bereitgestellt werden. Insbesondere kann das Vorspannelement die komplementäre Form der Aufnahme vervollständigen, so dass Aufnahme und Vorspannelement umlaufend im Wesentlichen komplementär zu dem Vorsprung sind. Das Vorspannelement ermöglicht insbesondere, dass eine genaue Positionierung und ein sicherer Halt der Befestigungselemente zueinander ermöglicht werden.

Insbesondere kann die Aufnahme eine Führung sein und der Vorsprung eine Schiene. Die komplementäre Form kann hier beispielsweise lediglich in der Ebene normal zur Einschieberichtung sein, so dass eine freie Positionierung entlang der Einschieberichtung möglich ist. Alternativ kann aber auch ein Anschlag oder eine andere, ebenfalls komplementäre Form vorgesehen sein, die die Positionierung zwischen Führung und Schiene in Einschieberichtung eindeutig festlegt.

In einer Ausführungsform ist der Vorsprung wenigstens bereichsweise teilkreisförmig ausgeführt und die Aufnahme wenigstens bereichsweise in Form eines Kreissegments. Wenn nun der teilkreisförmige Vorsprung und die dazu komplementäre Aufnahme in Form des Kreissegments miteinander in Anlage gebracht werden, so wird vornehmlich die translatorische Positionierung zwischen den Befestigungselementen bzw. Baugruppen definiert, wobei eine rotatorische Feineinstellung noch möglich sein kann. Alternativ kann aber auch ein Anschlag vorgesehen sein, der in Ergänzung die rotatorische Position festlegt. Der Anschlag kann insbesondere durch eine Anlagefläche gebildet werden, die sich abweichend von der Umfangsrichtung des Kreissegments erstreckt, beispielsweise durch eine Fläche in Tangentialrichtung, die sich direkt an das Kreissegment anschließt.

Der Vorsprung ist in Einschieberichtung konisch ausgebildet. Dies ermöglicht eine einfache Einführbarkeit des Vorsprungs in eine entsprechend gestaltete, komplementäre Aufnahme und einen sicheren Sitz des Vorsprungs in der Aufnahme, wenn diese vollständig in Anlage miteinander gekommen sind. Zudem wird dadurch die Position des Vorsprungs in der Aufnahme genau vorgegeben.

Die erste Baugruppe ist ein erster Roboterarm und die zweite Baugruppe ist ein zweiter Roboterarm, wobei der zweite Roboterarm um eine sich in Axialrichtung der Lager erstreckende Schwenkachse schwenkbar mit dem ersten Roboterarm verbunden ist. Alternativ kann die erste Baugruppe oder zweite Baugruppe auch ein Sockel oder Greifer eines Roboters sein, und die andere der ersten und zweiten Baugruppe ein Roboterarm, wobei die Baugruppen jeweils relativ drehbar oder schwenkbar miteinander verbunden sind. Es ist somit möglich, die erfindungsgemäße, lösbare Befestigung zwischen sämtlichen Komponenten bzw. Baugruppen eines Roboters einzusetzen, wobei vorteilhafterweise ein Einsatz an den Achsen des Roboters erfolgt.

Insbesondere können die Befestigungselemente im Wesentlichen orthogonal zur Schwenkachse ineinander eingeschoben werden. Dies ermöglicht eine platzsparende und ergonomische Montierbarkeit der Roboterarme.

Die zumindest eine Lagerung umfasst wenigstens eine im ersten Roboterarm um die Schwenkachse drehbar gelagerte Welle, wobei das erste Befestigungselement auf der Welle befestigt ist, oder integral und einteilig mit dieser ausgestaltet ist, und das zweite Befestigungselement im zweiten Roboterarm vorgesehen ist. Somit kann das erste Befestigungselement mit der Welle verdreht werden, wodurch eine Bewegung des zweiten Roboterarms gegenüber dem ersten Roboterarm ermöglicht oder bewirkt werden kann. Dafür kann die drehbar gelagerte Welle insbesondere angetrieben werden und/oder mit einem Drehsensor versehen sein, so dass eine geregelte Bewegung der Roboterarme zueinander möglich ist. Das erste Befestigungselement und dessen Vorsprung können insbesondere durch die Welle ausgebildet werden, wenn die Aufnahme eine wenigstens bereichsweise zur Welle komplementäre Form bereitstellt. Dies ist insbesondere bei großen Wellendurchmessern und Hohlwellen sinnvoll, da dann der Kraftschluss sicher ein relatives Verdrehen zwischen der Welle und der Aufnahme verhindern kann.

Der erste Roboterarm ist an einem Ende mit zwei sich parallel und in einem Abstand erstreckenden Backen ausgebildet, wobei der zweite Roboterarm zwischen diesen Backen gelagert ist und drehbar gelagerte Wellen in beiden Backen koaxial vorgesehen sind. Zwischen den Backen ist somit ein Bereich vorgesehen, in dem der zweite Roboterarm angeordnet und befestigt werden kann.

Auf den drehbar gelagerten Wellen ist vorteilhafterweise jeweils ein erstes Befestigungselement vorgesehen, das in jeweils ein Befestigungselement auf beiden Seiten des zweiten Roboterarms eingreifen kann. Insbesondere kann eine oder beide der Wellen in axialer Richtung verschoben werden, um eine Vorspannung auf die jeweilige Lagerung der Wellen aufzubringen. Dabei kann jede Welle jeweils nur mit einem Drehlager statisch unbestimmt gelagert sein, so dass erst durch das Vorsehen des zweiten Roboterarms ein statisch bestimmt gelagerter Drehkörper, umfassend die zwei Wellen und den zweiten Roboterarm, ausgebildet wird. Der zweite Roboterarm und die Wellen können somit einen gemeinsamen Drehkörper ausbilden. Die Wellen können also jeweils nur mit einem Lager gelagert werden und erst durch das Einbringen und Befestigen des zweiten Roboterarms wird eine bestimmte Lagerung der Wellen ermöglicht. Alternativ ist auch eine statisch bestimmte Lagerung beider Wellen jeweils mit zwei Drehlagern, oder einem zweireihigen Drehlager, insbesondere mit zwei axial nebeneinander angeordneten Wälzkörpersätzen, z.B. in Form eines doppelten Schrägkugellagers, möglich.

Alternativ ist der zweite Roboterarm an einem Ende mit zwei sich parallel und in einem Abstand erstreckenden Backen ausgebildet, wobei der erste Roboterarm zwischen diesen Backen gelagert ist und die beiden Enden von wenigstens einer im ersten Roboterarm drehbar gelagerten Welle an beiden Außenseiten des ersten Roboterarms koaxial vorgesehen sind. Insbesondere kann die im ersten Roboterarm drehbar gelagerte Welle integral ausgestaltet sein oder zwei an den jeweiligen beiden Außenseiten des Roboterarms unabhängig voneinander vorgesehene Wellen umfassen. Im letzten Fall kann eine statisch bestimmte Lagerung der Wellen jeweils erst wieder durch das Befestigen der Wellen an dem zweiten Roboterarm erreicht werden.

Vorteilhafterweise kann die wenigstens eine Welle als Hohlwelle ausgebildet sein und wenigstens ein Kabel und/oder wenigstens eine Befestigungsschraube durch das Innere der Hohlwelle geführt sein. Dies ermöglicht eine kompakte Ausgestaltung und zudem einen Schutz der Kabel, die für die Ansteuerung der verschiedenen Motoren, das Auslesen von Sensoren und/oder zur Versorgung und Steuerung eines Endeffektors vorgesehen werden können.

Die vorliegende Erfindung ermöglicht somit ein einfaches Einstellen der Lagervorspannung. Zudem kann mit der erfindungsgemäßen Ausgestaltung eine Einschränkung der Rotationsbewegung vermieden werden. Die Befestigung der Baugruppen ist wartungsfrei und kann für die Wartung von anderen Bauteilen einfach demontiert und danach wieder montiert werden. Zudem kann eine Lagervorspannung eingestellt werden, die dann über eine lange Laufzeit konstant ist. Die erfindungsgemäße Befestigung der Baugruppen aneinander zeichnet sich zudem durch eine hohe Steifigkeit aus.

Die erste und/oder zweite Baugruppe sind vorteilhafterweise in einer Plattenbauweise gestaltet, bei der mehrere parallele Platten mit Abstandshaltern aneinander befestigt werden. Die Abstandhalter können insbesondere durch weitere Platten bereitgestellt werden, die orthogonal zu den parallelen Platten angeordnet sind. Insbesondere sind die parallelen Platten und die dazu orthogonal angeordneten Platten mit einer Fingerverzahnung verbunden. Für eine Baugruppe können zwei Platten parallel zueinander an Abstandshaltern befestigt werden, wobei die Befestigungselemente dann jeweils axial außen in oder an den Platten vorgesehen sind. Wenn die Baugruppe mit sich in einem Abstand erstreckenden Backen ausgestaltet ist, können vier parallele Platten vorgesehen sein, die die jeweiligen seitlichen Begrenzungen der Backen bilden. Die Befestigungselemente können dann jeweils in oder an der Innenseite der inneren Platten vorgesehen werden. Alternativ können die Backen auch nur durch jeweils eine Platte gebildet werden. Zusätzlich werden Abdeckungselemente eingesetzt, mit denen die offenen Seiten zwischen den Platten abgedeckt werden. Insbesondere sind die Abdeckungen orthogonal zu den Platten angeordnet. Mit den Platten kann somit sowohl die Außenkontur als auch die Innenkontur der Baugruppen, insbesondere in Form von Roboterarmen, definiert werden.

Die Erfindung betrifft weiterhin ein Verfahren zur Montage von zwei Baugruppen, insbesondere von zwei Roboterarmen, eines Roboters, wobei eine erste Baugruppe mit einem Vorsprung bereitgestellt wird und eine zweite Baugruppe mit einer Aufnahme bereitgestellt wird, wobei entweder Vorsprung gegenüber der ersten Baugruppe oder die Aufnahme gegenüber der zweiten Baugruppe um eine Schwenkachse verdrehbar ist. Erfindungsgemäß wird dann der Vorsprung in einer linearen Einführungsrichtung in die Aufnahme eingeführt, und der Vorsprung in der Aufnahme befestigt.

Das Befestigen des Vorsprungs in der Aufnahme kann insbesondere durch Schrauben erfolgen, die sich orthogonal zur Einführungsrichtung erstrecken. Dafür werden insbesondere in der Aufnahme und im Vorsprung vorgesehene kreisförmige Öffnungen bzw. Bohrungen zueinander ausgerichtet. Zur Ausrichtung kann insbesondere ein Anschlag oder ein anderes komplementäres Befestigungselement zum Einsatz kommen.

Insbesondere umfasst das Befestigen des Vorsprungs in der Aufnahme das Vorspannen in der Einschieberichtung. Dafür kann der Vorsprung komplementär zur Aufnahme gestaltet sein und die Vorspannung die komplementären Bauteile passend ineinander drücken, so dass ein sicherer Sitz in einer vordefinierten Position bewirkt wird. Zudem kann durch die Vorspannung eine Spielfreiheit erreicht werden. Weiterhin ist es aber auch noch möglich, dass eine weitere Vorspannung nach dem Einführen des Vorsprungs in Axialrichtung der Schwenkachse aufgebracht wird, um deren Drehlager vorzuspannen.

Die Baugruppen können für das erfindungsgemäße Verfahren vormontiert bereitgestellt werden, sodass lediglich ein Zusammenschieben und Verbinden der Baugruppen zur Montage notwendig ist. Die Lager für die Schwenkachse können dafür insbesondere schon vorgespannt vorgesehen sein oder andernfalls nach dem Verbinden des Vorsprungs, insbesondere in Form einer Schiene, mit der Führung, insbesondere in Form einer Aufnahme, separat vorgespannt werden.

Die Erfindung wird nun weitergehend anhand von beispielhaften Ausführungsformen erläutert, die in den folgenden Figuren dargestellt sind. Es zeigen
- Figur 1: einen Roboter, in dem Baugruppen gemäß einer erfindungsgemäßen Ausführungsform verbunden sind;
- Figur 2: eine perspektivische Ansicht von zwei Baugruppen einer Ausführungsform eines erfindungsgemäßen Roboters vor dem Verbinden;
- Figur 3: die Baugruppen aus Figur 2 in verbundenem Zustand;
- Figur 4: eine Schnittansicht durch die erste und zweite Baugruppe gemäß Fig. 3 im Bereich der Lagerung;
- Figur 5: das erste Befestigungselement der Lagerung in Form eines Vorsprungs;
- Figur 6: eine perspektivische Ansicht von zwei Baugruppen einer Ausführungsform eines erfindungsgemäßen Roboters vor dem Verbinden;
- Figur 7: eine Schnittansicht durch die Baugruppen aus Fig. 6 im verbundenen Zustand; und
- Figur 8: das den Vorsprung bildende Befestigungselement aus den Fig. 6 und 7.

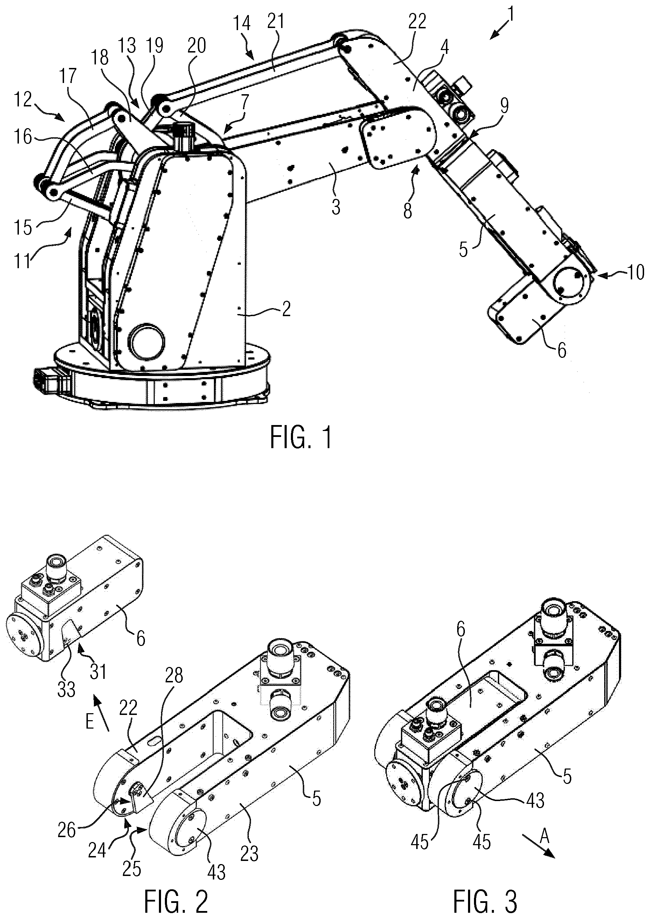

Der in Fig. 1 dargestellte Roboter 1 weist mehrere aneinander befestigte Baugruppen auf, nämlich einen um die Vertikalachse drehbaren Sockel 2, einen Schwenkarm 3, einen oberen Tragarm 4, einen unteren Tragarm 5 und einen Gelenkarm 6. Die vorgenannten Roboterarme 3, 4, 5, 6 sind gemäß einer seriellen Kinematik in Reihe angeordnet.

Bei dem dargestellten Roboter 1 handelt es sich um einen 6-Achs-Roboter. Die Vertikalachse für die Drehung des Sockels 2 stellt eine erste Achse des Roboters 1 dar. Zwischen dem Sockel 2 und dem Schwenkarm 3 ist ein erstes Gelenk 7 vorgesehen, das eine zweite Achse des Roboters 1 definiert. Zwischen den Schwenkarm 3 und dem oberen Tragarm 4 ist ein zweites Gelenk 7 vorgesehen, das eine dritte Achse des Roboters 1 definiert. Zwischen dem oberen Tragarm 4 und einem unteren Tragarm 5 ist ein drittes Gelenk 9 vorgesehen, das eine vierte Achse des Roboters 1 definiert. Die Drehachse des dritten Gelenks 9 ist in der Erstreckungsrichtung des Tragarms 4, 5, sodass der Tragarm 4, 5 in sich verdrehbar ist. Zwischen dem unterem Tragarm 5 und dem Gelenkarm 6 ist ein viertes Gelenk 10 vorgesehen, das eine fünfte Achse des Roboters 1 definiert. Ein Endeffektor in Form eines nicht dargestellten Greifers oder eines anderen Arbeitselements kann gegenüber dem Gelenkarm 6 um eine sechste Achse des Roboters 1 verdreht werden.

Die ersten und zweiten Gelenke 7, 8 ermöglichen ein Verschwenken des Schwenkarms 3 und Tragarms 4, 5 um die jeweilige, im Wesentlichen horizontale zweite und dritte Achse des Roboters 1. Die Antriebsmotoren des dritten und/oder vierten Gelenks 9, 10 sind direkt oder über ein Getriebe an den Gelenken vorgesehen, wie bei einer rein seriellen Kinematik. Bei dem Getriebe kann es sich um einen Antriebsriemen handeln.

Die Antriebsbewegungen für das erste Gelenk 7 und das zweite Gelenk 8 werden jeweils über Viergelenkketten 11, 12, 13 und 14 übertragen.

Dabei sind die erste Viergelenkkette 11 und die zweite Viergelenkkette 12 in Reihe angeordnet, um eine Antriebsbewegung auf den Schwenkarm 3 zu übertragen, sodass dieser gegenüber dem Sockel 2 verschwenkt werden kann. Die erste Viergelenkkette 11 weist eine in Fig. 1 im Sockel 2 verborgene erste Kurbel auf, die mittels eines ersten Antriebsmotors verschwenkt werden kann, und mit der Koppel 15 gelenkig verbunden ist, und entsprechend die Koppel 15 der ersten Viergelenkkette 11 antreibt. Die Koppel 15 ist gelenkig mit der Schwinge 16 der ersten Viergelenkkette 11 verbunden und treibt diese an. Die Schwinge 16 bildet gleichzeitig die Kurbel der zweiten Viergelenkkette 12, und ist mit der Koppel 17 der zweiten Viergelenkkette 12 gelenkig verbunden und treibt diese an. Die Schwinge 18 der zweiten Viergelenkkette 12 ist starr mit dem Schwenkarm 3 verbunden, und rotiert mit diesem bei dessen Schwenkbewegung. Die Schwinge 18 und der Schwenkarm 3 können einteilig ausgebildet sein. Insbesondere bilden die Schwinge 18 und der Schwenkarm 3 eine Wippe bezüglich des ersten Gelenks 7. Die Kurbel der erste Viergelenkkette 11 kann in Axialrichtung unverschieblich an einem Motor oder Getriebe im Sockel 2 über eine Antriebswelle angeflanscht sein. Bei dem Getriebe kann es sich auch um einen Antriebsriemen oder Ähnliches handeln. Die Schwinge 16 kann ebenfalls axial unverschieblich im Sockel 2 gelagert sein. Schließlich kann auch die Lagerung der Schwinge 18 im Gelenk 7 in Axialrichtung unverschieblich sein.

Die Antriebsbewegung für das Verschwenken des Tragarms 4, 5 gegenüber dem Schwenkarm 3 wird durch die dritte Viergelenkkette 13 und die vierte Viergelenkkette 14 von einem zweiten Antriebsmotor im Sockel 2 auf den Tragarm 4, 5 übertragen. Durch den zweiten Antriebsmotor wird eine innerhalb des Sockels 2 angeordnete und somit nicht in Fig. 1 erkennbare Kurbel der dritten Viergelenkkette 13 verschwenkt, die mit der Koppel 19 der dritten Viergelenkkette 13 gelenkig verbunden ist und diese antreibt. Die Koppel 19 ist mit der Schwinge 20 der dritten Viergelenkkette 13 gelenkig verbunden und treibt diese an. Die Schwinge 20 ist gleichzeitig die Kurbel der vierten Viergelenkkette 14, die mit der Koppel 21 der vierten Viergelenkkette 14 gelenkig verbunden ist und diese antreibt. Die Schwinge 22 und der obere Tragarm 4 sind starr in Form einer Wippe bezüglich des zweiten Gelenks 7 verbunden. Die Schwinge 22 der vierten Viergelenkkette 14 ist insbesondere einteilig mit dem oberen Tragarm 5 ausgebildet. Die Kurbel der dritten Viergelenckette 13 kann in Axialrichtung unverschieblich an einem Motor oder Getriebe im Sockel 2 über eine Antriebswelle angeflanscht sein. Bei dem Getriebe kann es sich auch um einen Antriebsriemen oder Ähnliches handeln. Die Schwinge 20 kann axial unverschieblich im Schwenkarm 3 gelagert sein. Schließlich kann auch die Lagerung der Schwinge 22 im zweiten Gelenk 8 in Axialrichtung unverschieblich sein.

Wie in Fig. 2 bis 5 gezeigt, bildet der untere Tragarm 5 eine erste Baugruppe, die mit einer zweiten Baugruppe in Form des Gelenkarms 6 gemäß einer erfindungsgemäßen Ausführungsform des Roboters 1 verbunden ist, so dass der Gelenkarm 6 im unteren Tragarm 5 um eine Schwenkachse in Axialrichtung A verschwenkbar ist.

Der untere Tragarm 5 weist äußere Backen 22, 23 auf, in denen jeweils eine Lagerung 24, 25 vorgesehen ist, die ermöglicht, ein erstes Befestigungselement 26, 27 um die Schwenkachse in Axialrichtung A zu verdrehen. Das erste Befestigungselement 26, 27 bildet einen Vorsprung 28, 29. Der Gelenkarm 6 weist auf jeder seiner Außenseiten in Axialrichtung A ein zweites Befestigungselement 30, 31 auf, das als eine Aufnahme 32, 33 ausgebildet ist. Das erste Befestigungselement 26, 27 ist im Bereich des Vorsprungs 28, 29 komplementär mit der Aufnahme 32, 33 des zweiten Befestigungselements 30, 31 ausgebildet. Der Vorsprung 28, 29 kann somit passgenau in der Aufnahme 32, 33 angeordnet werden, um den Gelenkarm 6 mit dem unteren Tragarm 5 zu verbinden, wie in Fig. 3 dargestellt.

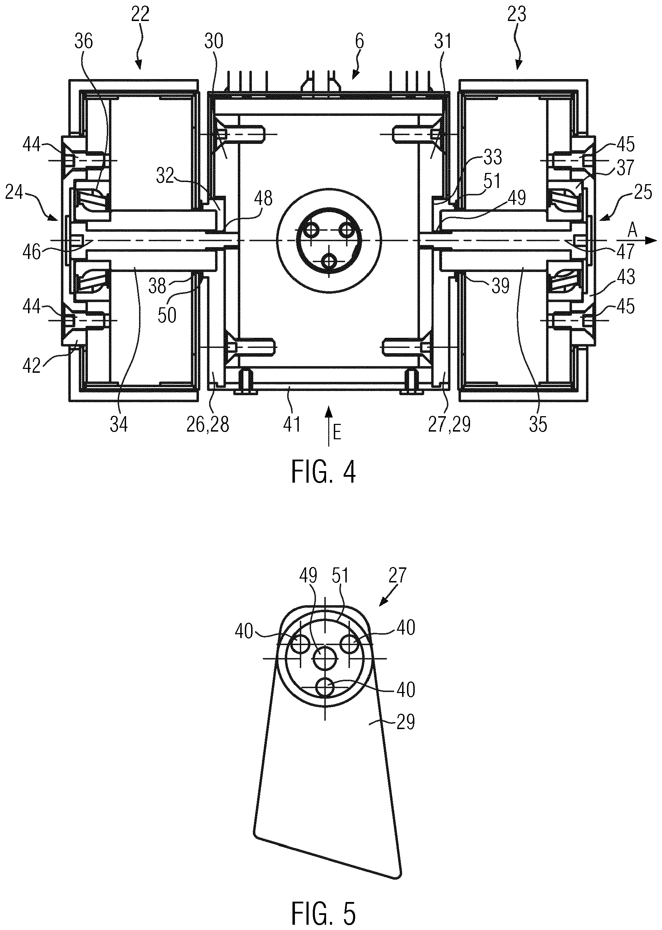

Gemäß der Schnittansicht in Fig. 4 ist das erste Befestigungselement 26, 27 auf einer Welle 34, 35 angeordnet, die rotierbar in der Backe 22, 23 des unteren Tragarms 5 gelagert ist. Dabei sind die Wellen 34, 35 koaxial in der Axialrichtung A zueinander ausgerichtet und verdrehbar. Jede der Wellen 34, 35 ist mit einem Drehlager 36, 37, insbesondere einem Schrägwälzlager, nahe der jeweiligen axialen Außenseite der jeweiligen Backe 22, 23 gelagert. Auf der axialen Innenseite der Backen 22, 23 ist jeweils eine zylindrische Öffnung 38, 39 vorgesehen, durch die die Welle 34, 35 zum Inneren der Backen 22, 23 axial übersteht. Auf dem axial inneren Ende der Welle 34, 35 ist das erste Befestigungselement 26, 27 befestigt, und zwar insbesondere durch Verschrauben durch die in Fig. 5 dargestellten kreisförmigen Öffnungen 40, die entlang des Umfangs der Stirnseite der Welle 34, 35 in der Welle 34, 35 und im ersten Befestigungselement 26, 27 vorgesehen sind.

Nachdem die Vorsprünge 28, 29 vollständig in die Aufnahmen 32, 33 eingeführt wurden, wird ein Vorspannelement 41 in Form einer Vorspannplatte mittels Schrauben auf dem Gelenkarm 6 vorgesehen, so dass das erste Befestigungselement 26, 27 in Einschieberichtung E in die Aufnahmen 32, 33 des zweiten Befestigungselements 30, 31 eingedrückt wird. Insbesondere ist das Vorspannelement 41 in Kontakt mit den Stirnseiten der Vorsprünge 28, 29, wobei hier insbesondere eine komplementäre Ausgestaltung, beispielsweise in Form einer Stufe, vorgesehen sein kann, so dass nicht nur Kraft in der Einschieberichtung E auf die Vorsprünge 28, 29 aufgebracht wird, sondern auch eine Sicherung und/oder Vorspannung der Vorsprünge 28, 29 in Axialrichtung A gewährleistet wird.

Im Bereich des axial äußeren Endes der Welle 34, 35 kann eine Lagerbuchse 42, 43 vorgesehen sein, die die Position der Drehlager 36, 37 zumindest in Axialrichtung A festlegt. Insbesondere kann die Lagerbuchse 42, 43 in ihrer Position in Axialrichtung A eingestellt werden, um die Vorspannung der Drehlager 36, 37 einzustellen. Dies ist möglich, da die Wellen 34, 35 zusammen mit dem Gelenkarm 6 eine integral verdrehbare Einheit bilden. Insbesondere kann die Vorspannung in Axialrichtung A dadurch eingestellt werden, dass die axiale Position der Lagerbuchse 42, 43 über Schrauben 44, 45 verstellt wird, mit denen die Lagerbuchse 42, 43 am unteren Tragarm 5 befestigt ist. Insbesondere kann die Lagerbuchse 42, 43 lediglich auf einer Seite des unteren Tragarms 5 vorgesehen sein, wobei auf den anderen Seite das Drehlager 36 direkt und nicht positionsverstellbar im Tragarm 5 aufgenommen sein kann.

Zur Befestigung der ersten Befestigungselemente 26, 27 in den zweiten Befestigungselementen 30, 31 kann weiterhin eine Befestigungsschraube 46, 47 vorgesehen sein, die sich zentral durch die Welle 34, 35 erstreckt und in das zweite Befestigungselement 30, 31 eingeschraubt ist. Somit kann eine axial spielfreie und sichere Verbindung zwischen der Welle 34, 35, dem ersten Befestigungselement 26, 27 und dem zweiten Befestigungselement 30, 31 bereitgestellt werden. Insbesondere ist die Befestigungsschraube 46, 47 durch eine Öffnung 48, 49 im ersten Befestigungselement 26, 27 geführt. Das erste Befestigungselement 26, 27 weist weiterhin einen umlaufenden Steg 50, 51 auf, der einen Innendurchmesser hat, der dem Außendurchmesser des axial inneren Endes der Welle 24, 25 entspricht, und somit die sichere Verbindung der Welle 24, 25 mit dem ersten Befestigungselement 26, 27 fördert.

Die Verbindung des unteren Tragarms 5 und des Gelenkarms 6 ist somit so ausgeführt, dass die außenliegende Baugruppe in Form des unteren Tragarms 5 ein erstes Befestigungselement 26, 27 mit einem Vorsprung 28, 29 aufweist, der jeweils eine Schiene bereitstellt. Die innenliegende Baugruppe in Form des Gelenkarms 6 weist das zweite Befestigungselement 30, 31 auf, dessen Aufnahme 32, 33 eine Führung bildet. Das erste Befestigungselement 26, 27 ist als separates Bauteil ausgeführt, wobei es bei der Baugruppenmontage starr mit der Welle 34, 35 verbunden wird. Die Welle 34, 35 ist als Hohlwelle ausgeführt. Durch die Hohlwelle können beispielsweise Kabel geführt werden und/oder Befestigungsschrauben 46, 47, wie im vorangehenden Ausführungsbeispiel beschrieben. Die Befestigungsschrauben 46, 47 verbinden die Baugruppen, nachdem der Vorsprung 28, 29 in die Aufnahme 32, 33 eingeführt wurde. Alternativ oder zusätzlich kann auch eine Festlegung des Vorsprungs 28, 29 in der Aufnahme 32, 33 durch das Vorspannelement 41 bewirkt werden, das eine Vorspannkraft in der Einschieberichtung E aufbringt. Zudem kann die Lagerung 24, 25, nachdem die beiden Baugruppen 5, 6 verbunden wurden, durch die Lageraufnahmebuchse 42, 43 in Axialrichtung A vorgespannt werden. Dies ermöglicht auch eine Ausrichtung der Baugruppen 5, 6 zueinander, bzw. eine Einstellung der Position der Baugruppen in Axialrichtung A, wenn beidseitig Lagerbuchsen 42, 43 vorgesehen sind. Die Aufnahme 32, 33 ist konisch ausgeführt, so dass bei der Montage zusätzlich zu dem mit der Befestigung durch die Schrauben erzeugten Kraftschluss auch noch ein Formschluss entsteht, der die Baugruppen 5, 6 exakt zueinander ausrichtet.

Die in Fig. 2 bis 5 erläuterte Verbindung von zwei Baugruppen in einem erfindungsgemäßen Roboter kann nicht nur zwischen den Baugruppen unterer Tragarm 5 und Gelenkarm 6 für das vierte Gelenk 10 des Roboters 1 vorgesehen werden, sondern auch für die anderen Gelenke des Roboters 1 oder für andere Robotertypen. Insbesondere kann eine entsprechende Ausgestaltung auch am ersten Gelenk 7 des Roboters zur Befestigung der Baugruppe Schwenkarm 3 an der Baugruppe Sockel 2 vorgesehen werden, am zweiten Gelenk 8 des Roboters 1 zur Befestigung der Baugruppe oberer Tragarm 4 an der Baugruppe Schwenkarm 3, oder am dritten Gelenk 9 zwischen dem oberen Tragarm 4 und dem unteren Tragarm 5. Bei der Ausgestaltung am dritten Gelenk 9 ist insbesondere nur ein Vorsprung am oberen oder unteren Tragarm 4, 5 vorgesehen, und nur eine Aufnahme am anderen des oberen und unteren Tragarms 4, 5.

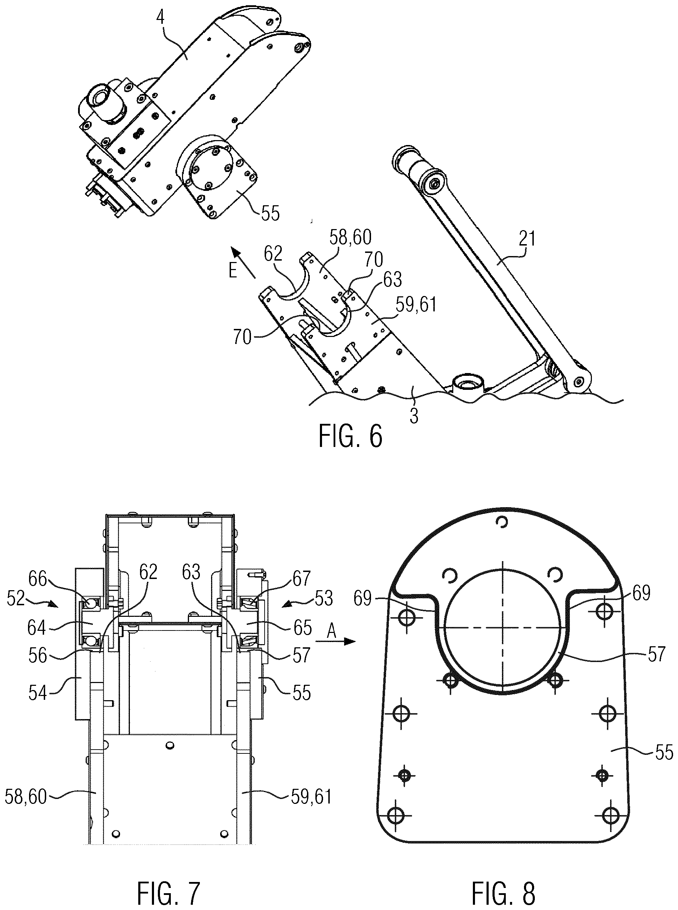

In Fig. 6 bis 8 wird eine weitere erfindungsgemäße Befestigung von Baugruppen in dem Roboter 1 gezeigt, am Beispiel der Befestigung einer ersten Baugruppe in Form des oberen Tragarms 4 an einer zweiten Baugruppe in Form des Schwenkarms 3. An dem oberen Tragarm 4 sind auf beiden Seiten Lagerungen 52, 53 vorgesehen, die ein erstes Befestigungselement 54, 55 umfassen, das einen nach innen gerichteten Vorsprung 56, 57 ausbildet.

Die zweite Baugruppe in Form des Schwenkarms 3 weist zwei sich parallel erstreckende Backen 58, 59 auf, die ein zweites Befestigungselement 60, 61 darstellen, das mit einer Aufnahme 62, 63 versehen ist.

Wie in Fig. 7 in Schnittansicht dargestellt ist, wird der jeweilige Vorsprung 56, 57 jeweils in die zugehörige Aufnahme 62, 63 eingesetzt. Dann können die ersten Befestigungselemente 54, 55 und die zweiten Befestigungselemente 60, 61 miteinander verschraubt werden. Die Lagerungen 52, 53 weisen jeweils eine fest mit dem oberen Tragarm 4 verbundene Welle 64, 65 auf, auf der mittels Drehlagern 66, 67 die ersten Befestigungselemente 54, 55 verdrehbar gelagert sind. Dabei kann auf einer oder auf beiden Seiten eine Vorspannbuchse 68 vorgesehen sein, mit der die Vorspannung der Drehlager 66, 67 in Axialrichtung A eingestellt werden kann.

In Fig. 8 ist das erste Befestigungselement 55 in Draufsicht in Axialrichtung A dargestellt. Der Vorsprung 57 ist in seinem unteren Bereich teilkreisförmig ausgeführt und ist somit zur Ausgestaltung der Aufnahme 63 als Kreissegment komplementär. Weiterhin kann der Vorsprung noch die in Fig. 8 dargestellte Anlagefläche 69 aufweisen, die mit einer Anlagefläche 70 des zweiten Befestigungselements 61 in Anlage kommt und somit als Anschlag eine relative Rotation zwischen Vorsprung 57 und Aufnahme 63 verhindert. Die Anlageflächen 69, 70 erstrecken sich tangential oder in einem Winkel zur Umfangsrichtung des Kreissegments.

In der Ausführungsform gemäß Fig. 6 bis 8 verläuft der Vorsprung 56, 57 im äußeren Bereich an der inneren Baugruppe in Form des oberen Tragarms 4. Insbesondere ist der Vorsprung 56, 57 axial innen am axial außen angeordneten ersten Befestigungselement 54, 55 vorgesehen. Die Wellen 64, 65 sind jeweils als Vollwelle und getrennt ausgeführt, wobei alternativ auch eine durchgehende Welle vorgesehen werden kann. Die Befestigung der Baugruppen 3 und 4 erfolgt, nachdem deren Befestigungselemente 54, 55, 60, 61 zusammengeschoben wurden, über eine Verschraubung von außen. Danach kann die Lagerung mittels der Vorspannbuchse 68 vorgespannt werden. Dies ermöglicht auch eine Ausrichtung der Baugruppen zueinander. Die Positionierung erfolgt über den Sitz der Drehlager 66, 67 im Befestigungselement 54, 55. Die Aufnahme 62, 63 ist eine Führung, die bereichsweise als Kreissegment ausgeführt ist, so dass bei der Montage zusätzlich zum Kraftschluss durch die Befestigung mit den Schrauben auch noch ein Formschluss entsteht, der die Baugruppen exakt zueinander ausrichtet. Die Befestigungsschrauben werden insbesondere von außen durch die ersten Befestigungselemente 54, 55 in die zweiten Befestigungselemente 60, 61 in Axialrichtung A eingeschraubt.

Der Vorsprung 56, 57 wird als eine Kombination eines Teilkreises mit linearen Anlageflächen 69 ausgeführt. Dabei sorgt der Formschluss des Teilkreises für die exakte Positionierung der Achse und die Anlageflächen 69 für eine Verdrehsicherung.

Die in Fig. 6 bis 8 dargestellte Befestigung von zwei Baugruppen kann auch an anderen Gelenken als dem zweiten Gelenk 8 des Roboters 1 oder bei anderen Robotern zum Einsatz kommen. Insbesondere kann die entsprechende Befestigung auch beim ersten Gelenk 7 des Roboters 1 zwischen der Baugruppe Sockel 2 und der Baugruppe Schwenkarm 3, beim dritten Gelenk 9 zwischen dem oberen Tragarm 4 und dem unteren Tragarm 5 oder beim vierten Gelenk 10 des Roboters 1 zwischen dem unteren Tragarm 5 und dem Gelenkarm 6 zum Einsatz kommen.

Die Aufnahme und der Vorsprung können jegliche komplementären Formen annehmen, die durch Formschluss ausrichtbar sind. In den vorangegangenen Ausführungsformen wurden bereits die Formen konisch zulaufend und teilkreisförmig beispielhaft dargestellt. Weiterhin können aber auch Schwalbenschwanzführungen o. Ä. zum Einsatz kommen. Der Formschluss und/oder Kraftschluss zwischen dem Vorsprung und der Aufnahme kann erst beim Zusammenbau eingestellt werden, indem die Aufnahme oder der Vorsprung mechanisch gespreizt oder geklemmt wird.

Die Befestigung zwischen den Befestigungselementen kann wie in den vorangegangenen Ausführungsbeispielen durch Verschraubung erfolgen. Es ist aber auch möglich, keine Verschraubung vorzusehen und den Vorsprung in der Aufnahme nur durch Klemmkraft zu fixieren. Dafür kann der Vorsprung insbesondere in die Aufnahme eingepresst werden. Weiter alternativ kann eine unlösbare Verbindung durch Kleben vorgesehen werden. Dann ist aber im Gegensatz zu den Ausführungsformen mit einer lösbaren Befestigung der Befestigungselemente keine einfache Demontage gegeben.

Das Befestigungselement, das mit der Welle der Lagerung verbunden ist, wird mit dieser vorteilhafterweise starr verbunden. In den beispielhaften Ausführungsformen wurde jeweils ein Befestigungselement in Form eines Vorsprungs fest mit der Achse verbunden. Alternativ kann aber auch ein Befestigungselement in Form einer Aufnahme fest mit der Welle verbunden werden. Die Welle und das Befestigungselement können, wie in den vorangegangenen Ausführungsformen, als separate aneinander befestigte Bauteile ausgestaltet werden, oder aber auch aus einem integralen Bauteil bestehen.

Die Lagerung kann bereits vorgespannt in der Baugruppe ausgeführt werden. Alternativ kann das Vorspannen erst nach Befestigen der Befestigungselemente erfolgen, wie in den vorangegangenen Ausführungsformen gezeigt. Für sämtliche Drehlager können jeweils geeignete Lagerarten eingesetzt werden, beispielsweise jegliche Art von Wälzlagern und/oder Gleitlagern. Insbesondere ist die Lagerung erst nach dem Befestigen der ersten und zweiten Befestigungselemente statisch bestimmt. Vorher kann die Lagerung auch unbestimmt sein.

Gemäß der ersten Ausführungsform in Fig. 2 bis 5 ist die Lagerung in axial äußeren Backen 22, 23 der ersten Baugruppe 5 vorgesehen, wobei das erste Befestigungselement 26, 27 als Vorsprung 28, 29 ausgestaltet ist, und das zweite Befestigungselement 30, 31 als Aufnahme 32, 33 auf beiden axial äußeren Seiten der inneren zweiten Baugruppe.

In dem Ausführungsbeispiel gemäß Fig. 6 bis 8 ist die Lagerung in der ersten Baugruppe 4 vorgesehen, die axial innerhalb von zwei Backen 58, 59 einer zweiten Baugruppe 3 angeordnet ist. Die ersten Befestigungselemente 54, 55 sind als gegenüber der ersten Baugruppe 4 verdrehbare Vorsprünge 56, 57 ausgestaltet, die in den Aufnahmen 62, 63 in den Backen 58, 59 der zweiten Baugruppe 3 aufgenommen werden. Gemäß Fig. 7 ist das erste Befestigungselement 54, 55 gegenüber der Welle 64, 65 verdrehbar gelagert. Alternativ kann aber auch die Welle 64, 65 gegenüber der ersten Baugruppe 4 drehbar gelagert sein und das erste Befestigungselement 54, 55 fest auf der Welle 64, 65 angeordnet sein. Dies ist insbesondere bei Ausgestaltungen mit einer durchgehenden Welle anstelle der zwei einzelnen Wellen 64, 65 vorteilhaft.

In weiteren alternativen Ausführungsformen kann die Aufnahme als erstes Befestigungselement drehbar gelagert sein und zwar entweder auf axialen Außenseiten der ersten Baugruppe oder auf zwei axialen Innenseiten innerhalb von Backen, die durch die erste Baugruppe ausgebildet werden können.

Erfindungsgemäß können zwei Roboterbaugruppen mit einem System aus Aufnahmen, beispielsweise Führungen, und Vorsprüngen, beispielsweise Schienen, ausgeführt werden. Dabei ist die Aufnahme ein Bestandteil der einen Baugruppe und der Vorsprung ein Bestandteil der anderen Baugruppe. Im Regelfall sind an einer Baugruppe zwei Vorsprünge und an der anderen Baugruppe zwei Aufnahmen vorgesehen, die jeweils ineinander gesetzt werden. Alternativ ist es aber auch möglich, dass lediglich eine Aufnahme an einer Baugruppe und ein Vorsprung an der anderen Baugruppe vorgesehen werden. Insbesondere ist eine der Baugruppen bereichsweise innerhalb der anderen Baugruppe vorgesehen. Dann können die Vorsprünge entweder innen an der äußeren Baugruppe oder außen an der inneren Baugruppe vorgesehen sein und die Führungen jeweils alternativ außen an der inneren Baugruppe oder innen an der äußeren Baugruppe. Entweder die Vorsprünge oder die Aufnahmen können relativ zu ihrer jeweiligen Baugruppe verdrehbar sein. D. h. eines der beiden Befestigungselemente, Vorsprung oder Aufnahme, ist vorteilhafterweise drehbar gelagert und beinhaltet dafür eine Achslagerung. Die Achslagerung kann bereits vor der Zusammenführung der beiden Baugruppen statisch bestimmt sein, oder aber noch statisch unbestimmt sein und erst beim Zusammenbau der beiden Baugruppen statisch bestimmt werden.

## Patentansprüche

1. Roboter (1) mit
einer ersten Baugruppe (4, 5), und
einer zweiten Baugruppe (3, 6),
wobei die erste Baugruppe (4, 5) ein erster Roboterarm ist, und die zweite Baugruppe (3, 6) ein zweiter Roboterarm, wobei der zweite Roboterarm um eine sich in Axialrichtung (A) erstreckende Schwenkachse schwenkbar mit dem ersten Roboterarm verbunden ist, wobei im ersten Roboterarm (4, 5) Lagerungen (24, 25, 52, 53) vorgesehen sind, durch die der zweite Roboterarm (3, 6) relativ zum ersten Roboterarm (4, 5) bewegbar ist,
wobei die Lagerungen (24, 25, 52, 53) ein erstes Befestigungselement (26, 27, 54, 55) und drehbar gelagerte Wellen (34, 35, 64, 65) umfassen, und der zweite Roboterarm (3, 6) ein zweites Befestigungselement (30, 31, 60, 61) umfasst, wobei das erste Befestigungselement (26, 27, 54, 55) oder das zweite Befestigungselement (30, 31, 60, 61) eine Aufnahme (32, 33, 62, 63) bildet, und das andere des ersten Befestigungselements (26, 27, 54, 55) und zweiten Befestigungselements (30, 31, 60, 61) einen Vorsprung (28, 29, 56, 57) bildet, und wobei der Vorsprung (28, 29, 56, 57) für die Befestigung in einer Einschieberichtung (E) in die Aufnahme (32, 33, 62, 63) einschiebbar ist, und
wobei der erste Roboterarm (5) an einem Ende mit zwei sich parallel und in einem Abstand erstreckenden Backen (22, 23) ausgebildet ist, wobei der zweite Roboterarm (6) zwischen diesen Backen (22, 23) gelagert ist, und die drehbar gelagerte Wellen (34, 35) in beiden Backen (22, 23) koaxial vorgesehen sind, oder
wobei der zweite Roboterarm (3) an einem Ende mit zwei sich parallel und in einem Abstand erstreckenden Backen (58, 59) ausgebildet ist, wobei der erste Roboterarm (4) zwischen diesen Backen (58, 59) gelagert ist, und die Enden von wenigstens einer der im ersten Roboterarm (4) angeordneten Wellen (64, 65) an beiden Außenseiten des ersten Roboterarms (4) koaxial vorgesehen sind,
**dadurch gekennzeichnet, dass** der Vorsprung in der Einschieberichtung (E) konisch ausgebildet ist.

2. Roboter nach Anspruch 1, wobei ein Vorspannelement (41) vorgesehen ist, mit dem eine Vorspannung auf den Vorsprung (28, 29, 56, 57) in der Einschieberichtung (E) aufbringbar ist.

3. Roboter nach Anspruch 1 oder 2, wobei die Aufnahme (32, 33) eine Führung ist, und der Vorsprung (28, 29) eine Schiene ist.

4. Roboter nach einem der Ansprüche 1 bis 3, wobei der Vorsprung (56, 57) wenigstens bereichsweise teilkreisförmig ausgeführt ist, und die Aufnahme (62, 63) wenigstens bereichsweise in Form eines Kreissegments ist.

5. Roboter nach einem der vorhergehenden Ansprüche, wobei die Befestigungselemente im Wesentlichen orthogonal zur Axialrichtung (A) ineinander eingeschoben werden können.

6. Roboter nach einem der vorhergehenden Ansprüche, wobei die Wellen (34, 35) im ersten Roboterarm (5) um die Schwenkachse drehbar gelagert sind, und wobei das erste Befestigungselement (26, 27) auf den Wellen (34, 35) befestigt oder integral mit den Wellen (34, 35) ausgestaltet ist.

7. Roboter nach einem der vorhergehenden Ansprüche, wobei wenigstens eine Welle (34, 35) als Hohlwelle ausgeführt ist, und wenigstens ein Kabel und/oder wenigstens eine Befestigungsschraube (46, 47) durch das Innere der Hohlwelle geführt sind.

8. Verfahren zur Montage von zwei Baugruppen (5, 6) umfassend zwei Roboterarme eines Roboters (1), umfassend:
Bereitstellen eines ersten Roboterarms (5), welcher an einem Ende mit zwei sich parallel und in einem Abstand erstreckenden Backen (22, 23) mit einem Vorsprung (28, 29), in welchen drehbar gelagerte Wellen (34, 35) koaxial vorgesehen sind, ausgebildet ist, Bereitstellen eines zweiten Roboterarms (6) mit einer Aufnahme (32, 33),
Lagern des zweiten Roboterarms (6) zwischen diesen Backen (22, 23) des ersten Roboterarms (5),
wobei der Vorsprung (28, 29) gegenüber dem ersten Roboterarm (5) um eine Schwenkachse verdrehbar ist,
Einführen des Vorsprungs (28, 29) in einer linearen Einschieberichtung (E) in die Aufnahme (32, 33), wobei der Vorsprung (28, 29) in der Einschieberichtung (E) konisch ausgebildet ist, und
Befestigen des Vorsprungs (28, 29) in der Aufnahme (32, 33).

9. Verfahren zur Montage von zwei Baugruppen (2, 3, 4) umfassend zwei Roboterarme eines Roboters (1), umfassend:
Bereitstellen eines ersten Roboterarms (4) mit einem Vorsprung (56, 57), in welchem die Enden von wenigstens einer der im ersten Roboterarm (4) angeordneten Wellen (64, 65) an beiden Außenseiten koaxial vorgesehen sind,
Bereitstellen eines zweiten Roboterarms (3), welcher an einem Ende mit zwei sich parallel und in einem Abstand erstreckenden Backen (58, 59) mit einer Aufnahme (62, 63) ausgebildet ist,
wobei der Vorsprung (56, 57) gegenüber dem ersten Roboterarm (4) um eine Schwenkachse verdrehbar ist,
Lagern des ersten Roboterarms (4) zwischen diesen Backen (58, 59) des zweiten Roboterarms (3),
Einführen des Vorsprungs (56, 57) in einer linearen Einschieberichtung (E) in die Aufnahme (62, 63), wobei der Vorsprung (28, 29) in der Einschieberichtung (E) konisch ausgebildet ist, und
Befestigen des Vorsprungs (56, 57) in der Aufnahme (62, 63).

10. Verfahren nach den Ansprüchen 8 oder 9, wobei das Befestigen des Vorsprungs (28, 29, 56, 57) in der Aufnahme (32, 33, 62, 63) das Vorspannen in der Einschieberichtung (E) umfasst.

## Claims

1. Robot (1) having
a first assembly (4, 5), and
a second assembly (3, 6),
wherein said first assembly (4, 5) is a first robotic arm and said second assembly (3, 6) is a second robotic arm, wherein said second robotic arm is connected to said first robotic arm in a manner pivotable about a pivot axis extending in the axial direction (A),
wherein bearing arrangements (24, 25, 52, 53), by which said second robotic arm (3, 6) can be moved relative to said first robotic arm (4, 5), are provided in said first robotic arm (4, 5),
wherein said bearing arrangements (24, 25, 52, 53) comprise a first fastening element (26, 27, 54, 55) and rotatably mounted shafts (34, 35, 64, 65), and
said second robotic arm (3, 6) comprises a second fastening element (30, 31, 60, 61),
wherein said first fastening element (26, 27, 54, 55) or said second fastening element (30, 31, 60, 61) forms a receptacle (32, 33, 62, 63), and the other of said first fastening element (26, 27, 54, 55) and said second fastening element (30, 31, 60, 61) forms a protrusion (28, 29, 56, 57), and wherein for fastening, said protrusion (28, 29, 56, 57) can be inserted into said receptacle (32, 33, 62, 63) in a direction of insertion (E), and
wherein said first robotic arm (5) comprises at one end two jaws (22, 23) extending in parallel and at a distance, wherein said second robotic arm (6) is mounted between said jaws (22, 23), and said rotatably mounted shafts (34, 35) are provided coaxially in both jaws (22, 23), or
wherein said second robotic arm (3) comprises at one end two jaws (58, 59) extending in parallel and at a distance, wherein said first robotic arm (4) is mounted between said jaws (58, 59), and the ends of at least one of said shafts (64, 65) arranged in said first robotic arm (4) are provided coaxially on both outer sides of said first robotic arm (4), **characterized in that** said protrusion (28, 29) is formed to be conical in said direction of insertion (E).

2. Robot according to claim 1, wherein a pretensioning element (41) is provided with which a pretension can be applied to said protrusion (28, 29, 56, 57) in said direction of insertion (E).

3. Robot according to claim 1 or 2, wherein said receptacle (32, 33) is a guide and said protrusion (28, 29) is a rail.

4. Robot according to one of the claims 1 to 3, wherein said protrusion (56, 57) is formed at least in sections to have the shape of a graduated circle and said receptacle (62, 63) is at least in sections of the shape of a segment of a circle.

5. Robot according to one of the preceding claims, wherein said fastening elements can be inserted into one another substantially orthogonally relative to said axial direction (A).

6. Robot according to one of the preceding claims, wherein said shafts (34, 35) are mounted in said first robotic arm (5) to be rotatable about the pivot axis, and wherein said first fastening element (26, 27) is attached to said shafts (34, 35) or integrally formed with said shafts (34, 35).

7. Robot according to one of the preceding claims, wherein at least one shaft (34, 35) is a hollow shaft, and at least one cable and/or at least one fastening screw (46, 47) extends through the interior of said hollow shaft.

8. Method for mounting two assemblies (5, 6), comprising two robotic arms of a robot (1), comprising:
providing a first robotic arm (5) comprising at one end two jaws (22, 23), which extend in parallel and at a distance, with a protrusion (28, 29) in which rotatably mounted shafts (34, 35) are provided coaxially,
providing a second robotic arm (6) with a receptacle (32, 33),
mounting said second robotic arm (6) between said jaws (22, 23) of said robotic arm (5), wherein said protrusion (28, 29) can be rotated relative to said first robotic arm (5) about a pivot axis,
inserting said protrusion (28, 29) in a linear direction of insertion (E) into said receptacle (32, 33), wherein said protrusion (28, 29) is formed to be conical in said direction of insertion (E), and
fastening said protrusion (28, 29) in said receptacle (32, 33).

9. Method for mounting two bearing arrangements (2, 3, 4) comprising two robotic arms of a robot (1), comprising:
providing a first robotic arm (4) with a protrusion (56, 57) in which the ends of at least one of said shafts (64, 65) arranged in said first robotic arm (4) are provided coaxially on both outer sides,
providing a second robotic arm (3) comprising at one end two jaws (58,59), which extend in parallel and at a distance, with a receptacle (62, 63),
wherein said protrusion (56, 57) can be rotated relative to said first robotic arm (4) about a pivot axis,
mounting said first robotic arm (4) between said jaws (58, 59) of said second robotic arm (3),
inserting said protrusion (56, 57) in a linear direction of insertion (E) into said receptacle (62, 63), wherein said protrusion (28, 29) is formed to be conical in said direction of insertion (E), and
fastening said protrusion (56, 57) in said receptacle (62, 63).

10. Method according to claims 8 or 9, wherein fastening said protrusion (28, 29, 56, 57) in said receptacle (32, 33, 62, 63) comprises pretensioning in said direction of insertion (E).

## Revendications

1. Robot (1) comprenant
un premier module (4, 5), et
un second module (3, 6),
dans lequel le premier module (4, 5) est un premier bras de robot et le second module (3, 6) est un second bras de robot, dans lequel le second bras de robot est relié de manière pivotante au premier bras de robot autour d'un axe de pivotement (A) s'étendant dans la direction axiale, dans lequel des paliers (24, 25, 52, 53) grâce auxquels le second bras de robot (3, 6) peut être déplacé par rapport au premier bras de robot (4, 5) sont prévus dans le premier bras de robot (4, 5), dans lequel les paliers (24, 25, 52, 53) comprennent un premier élément de fixation (26, 27, 54, 55) et des arbres (34, 35, 64, 65) montés rotatifs, et
le second bras de robot (3, 6) comprend un second élément de fixation (30, 31, 60, 61), dans lequel le premier élément de fixation (26, 27, 54, 55) ou le second élément de fixation (30, 31, 60, 61) forme un logement (32, 33, 62, 63), et l'autre parmi le premier élément de fixation (26, 27, 54, 55) et le second élément de fixation (30, 31, 60, 61) forme une saillie (28, 29, 56, 57), et dans lequel la saillie (28, 29, 56, 57) peut être insérée dans une direction d'insertion (E) dans le logement (32, 33, 62, 63) en vue de sa fixation, et
dans lequel le premier bras de robot (5) est réalisé, au niveau d'une extrémité, avec deux mâchoires (22, 23) s'étendant parallèlement et à une certaine distance l'une de l'autre, dans lequel le second bras de robot (6) est monté entre lesdites mâchoires (22, 23), et les arbres (34, 35) montés rotatifs sont fournis de manière coaxiale dans les deux mâchoires (22, 23), ou
dans lequel le second bras de robot (3) est réalisé, au niveau d'une extrémité, avec deux mâchoires (58, 59) s'étendant parallèlement et à une certaine distance l'une de l'autre, dans lequel le premier bras de robot (4) est monté entre lesdites mâchoires (58, 59), et les extrémités d'au moins un des arbres (64, 65) agencés dans le premier bras de robot (4) sont fournies de manière coaxiale au niveau des deux côtés extérieurs du premier bras de robot (4),
**caractérisé en ce que** la saillie est réalisée de manière conique dans la direction d'insertion (E).

2. Robot selon la revendication 1, dans lequel un élément de précontrainte (41) est fourni, avec lequel une précontrainte peut être appliquée sur la saillie (28, 29, 56, 57) dans la direction d'insertion (E).

3. Robot selon la revendication 1 ou 2, dans lequel le logement (32, 33) est un guide et la saillie (28, 29) est un rail.

4. Robot selon l'une quelconque des revendications 1 à 3, dans lequel la saillie (56, 57) est réalisée au moins par endroits sous forme de cercle partiel, et le logement (62, 63) se présente au moins par endroits sous la forme d'un segment de cercle.

5. Robot selon l'une quelconque des revendications précédentes, dans lequel les éléments de fixation peuvent être insérés l'un dans l'autre de manière essentiellement orthogonale par rapport à la direction axiale (A).

6. Robot selon l'une quelconque des revendications précédentes, dans lequel les arbres (34, 35) sont montés pivotants autour de l'axe de pivotement dans le premier bras de robot (5), et dans lequel le premier élément de fixation (26, 27) est fixé sur les arbres (34, 35) ou est conçu pour faire partie intégrante des arbres (34, 35).

7. Robot selon l'une quelconque des revendications précédentes, dans lequel au moins un arbre (34, 35) est mis en œuvre sous la forme d'un arbre creux, et au moins un câble et/ou au moins une vis de fixation (46, 47) sont guidés à travers l'intérieur de l'arbre creux.

8. Procédé de montage de deux modules (5, 6), comprenant deux bras de robot d'un robot (1), comprenant les étapes ci-dessous consistant à :
fournir un premier bras de robot (5) qui est réalisé, au niveau d'une extrémité, avec deux mâchoires (22, 23) s'étendant parallèlement et à distance l'une de l'autre et
comprenant une saillie (28, 29) dans laquelle des arbres (34, 35) montés rotatifs sont fournis de manière coaxiale,
fournir un second bras de robot (6) comprenant un logement (32, 33),
monter le second bras de robot (6) entre lesdites mâchoires (22, 23) du premier bras de robot (5),
dans lequel la saillie (28, 29) peut tourner par rapport au premier bras de robot (5) autour d'un axe de pivotement,
introduire la saillie (28, 29) dans le logement (32, 33) dans une direction d'insertion linéaire (E), dans lequel la saillie (28, 29) est réalisée de manière conique dans la direction d'insertion (E), et
fixer la saillie (28, 29) dans le logement (32, 33).

9. Procédé de montage de deux modules (2, 3, 4) comprenant deux bras de robot d'un robot (1), comprenant les étapes ci-dessous consistant à :
fournir un premier bras de robot (4) comprenant une saillie (56, 57) dans laquelle les extrémités d'au moins un des arbres (64, 65) agencés dans le premier bras de robot (4) sont fournies de manière coaxiale au niveau des deux côtés extérieurs,
fournir un second bras de robot (3) qui est réalisé, au niveau d'une extrémité, avec deux mâchoires (58, 59) s'étendant parallèlement et à une certaine distance l'une de l'autre et comprenant un logement (62, 63),
dans lequel la saillie (56, 57) peut tourner par rapport au premier bras de robot (4) autour d'un axe de pivotement,
monter le premier bras de robot (4) entre lesdites mâchoires (58, 59) du second bras de robot (3),
introduire la saillie (56, 57) dans le logement (62, 63) dans une direction d'insertion linéaire (E), dans lequel la saillie (28, 29) est réalisée de manière conique dans la direction d'insertion (E), et
fixer la saillie (56, 57) dans le logement (62, 63).

10. Procédé selon la revendication 8 ou 9, dans lequel l'étape de fixation de la saillie (28, 29, 56, 57) dans le logement (32, 33, 62, 63) comprend une étape consistant à la précontraindre dans la direction d'insertion (E).
